# EUROPÄISCHE PATENTSCHRIFT

(11) **EP 0 542 186 B1**
(45) Veröffentlichungstag und Bekanntmachung des Hinweises auf die Patenterteilung: **04.09.1996**
(21) Anmeldenummer: 92119183.9
(22) Anmeldetag: 10.11.1992
(51) Int. Cl.: B29B 17/00, B29C 70/00, B29L 31/58, B29K 105/12

(54) **Verfahren zum Herstellen eines Schichtwerkstoffs unter Wiederverwendung von Kunststoffabfällen und eigensteifer, Kunststoffabfälle enthaltender Schichtwerkstoff**
Method for manufacturing of multilayered material from recycled plastics, and multilayered material containing recycled plastics
Procédé pour la fabrication d'un matériau en couches par recyclage des déchets en plastique, et matériau en couches rigidifié contenant des déchets en plastique

(30) Priorität: 15.11.1991 DE 4137744
(43) Veröffentlichungstag der Anmeldung: 19.05.1993
(73) Patentinhaber: Eduard Küsters Maschinenfabrik GmbH & Co. KG, 47805 Krefeld (DE)
(72) Erfinder: Ahrweiler, Karl-Heinz, W-4156 Willich 1 (DE)
(74) Vertreter: Schumacher, Horst, Dr. Dipl.-Phys.

(56) Entgegenhaltungen:
- EP-A- 0 245 544
- DE-A- 2 722 774
- DE-A- 3 420 132
- FR-A- 2 293 309
- PATENT ABSTRACTS OF JAPAN vol. 7, no. 227 (M-248)(1372) 7. Oktober 1983 & JP-A-58 119 826 (KINUGAWA GOMU KOGYO K.K.) 16. Juli 1983
- PATENT ABSTRACTS OF JAPAN vol. 9, no. 261 (M-422)(1984) 18. Oktober 1985 & JP-A-60 109 806 (SEKISUI KAGAKU KOGYO K.K.) 15. Juni 1985

## Beschreibung

Die Erfindung betrifft ein Verfahren gemäß dem Obergegriff des Anspruchs 1 und einen Schichtwerkstoff gemäß dem Oberbegriff des Anspruchs 6.

Bei aus Kunststoffen bestehenden oder Kunststoffe enthaltenden Schichtwerkstoffen wie Bodenbelagsplatten, Wandverkleidungsplatten, Auskleidungsformteilen in Kraftfahrzeugen und vielem anderen mehr ist es grundsätzlich bekannt, Kunststoffabfälle - zumeist als Beimengungen - einzuarbeiten, um damit das verwendete Rohmaterial zu "strecken" und Abfallkunststoffe einer sinnvollen Wiederverwendung zuzuführen. Für diese Zwecke eignen sich in der Regel nur gut vorselektierte Kunststoffabfälle. Außerdem sind in der Regel mehr oder minder aufwendige Aufbereitungsschritte erforderlich, um die Kunststoffabfälle für den Herstellungsprozeß des Schichtwerkstoffs und für die Eignung im Schichtwerkstoff wiederverwendbar zu machen.

Ein besonders großes Problem stellt z.B. die Wiederverwendung von Abfällen aus aus Kunststoff bestehenden oder Kunststoffe enthaltenden Textilfasern und ganz besonders von Teppichböden - seien es Abfallstücke neuer Textilfasern, insbesondere neuer Teppichböden, seien es bereits gebrauchte, nicht mehr benötigte Textilien, insbesondere Teppichböden - dar.

Aus der FR-A-22 93 309 ist ein Preßstoffkörper aus mit Bindemittel versetztem und in gepreßtem Zustand abgebundenem span- oder schnitzelartigen Abfallmaterial bekannt, bei welchem das Abfallmaterial aus zerschnittenen End- oder/und Randstreifen der Textilproduktion, insbesondere von Teppichen, Bodenbelägen und dergleichen besteht. Das Bindemittel kann ein schaumfähiger Stoff, insbesondere Polyurethan, oder ein Klebstoff sein. Der Preßstoffkörper kann an mindestens einer, vorzugsweise beiden Außenflächen mit einer diese überdeckenden Schicht zum Beispiel aus Papier, textilem Material, Kunststoff, Holz, Asbest oder dergleichen versehen sein, die gleichzeitig mit dem Preßvorgang aufgebracht werden kann.

Die DE-A 27 22 774 betrifft ein Verfahren zur Verwertung von textilen Abfällen mit thermoplastischen Anteilen, bei welchem die Abfälle geschnitten und über den Schmelzpunkt eines Teils der thermoplastischen Teile erhitzt, gepreßt und abgekühlt werden. Die Abfälle können aus Teppichresten bestehen, die statt geschnitten auch gerissen werden können. Die erhaltenen Preßteile umfassen die aus den geschmolzenen und unter Formgebung erstarrten thermoplastischen Anteile der Abfälle, in die die ungeschmolzenen fasrigen Anteile fest eingebettet sind.

Die DE-A 34 20 132 liegt den Oberbegriffen der Ansprüche 1 und 6 zugrunde und betrifft ein Verfahren und eine Vorrichtung zum Herstellen von Platten aus einer textilartigen Fasermatte auf einer Doppelbandpresse. Die Fasermatte besteht aus thermoplastischem Material, gemischt mit anderen Fasern, und wird in der Doppelbandpresse unter Beheizung auf die gewünschte Dicke komprimiert. Dabei schmelzen die thermoplastischen Anteile, zum Beispiel die Polypropylenfasern, und verfließen in der gesamten verdichteten Platte, um so alle anderen Fasern miteinander zu verbinden, so daß nach dem nachfolgenden Kühlen eine im wesentlichen feste Platte der Presse entnommen werden kann.

Bei dem vorstehend beschriebenen Stand der Technik ist eine Strukturierung der erzeugten Platten oder Preßstoffkörper in Preßrichtung nicht erwähnt. An einigen Stellen wird vielmehr beschrieben, daß die thermoplastischen Anteile in geschmolzenem Zustand die Platte bzw. den Preßstoffkörper ganz durchdringen sollen. Dadurch werden die Produkte sehr kompakt und erhalten eine hohe Dichte.

Davon ausgehend liegt der Erfindung die Aufgabe zugrunde, das Verpressen von thermoplastische Abfälle enthaltenden Textilfasern umfassenden Abfällen, insbesondere von Teppichböden, derart auszugestalten, daß die Produkte eine geringere Dichte aufweisen.

Diese Aufgabe wird hinsichtlich eines Verfahrens durch die Merkmale des Anspruchs 1 und hinsichtlich eines flächigen Werkstoffes durch die Merkmale des Anspruchs 6 gelöst.

Es ergibt sich hierdurch ein Schichtwerkstoff mit einer über die Dicke vorliegenden Strukturierung.

Unter einem "mehr oder weniger eigensteifen flächigen Werkstoff" wird im Sinne der Erfindung jedes Flächenmaterial verstanden, welches bei einer vorgegebenen, nicht unbedingt - aber in der Regel - mehr oder minder gleichmäßigen Schichtdicke Verwendung findet, sei es in Form mehr oder minder ebener Platten oder Bahnen oder sei es als Wandung - auch die eines Behälters - eines dreidimensionalen nicht ebenen Formteils mit einem aus unterschiedlichen Schichten zusammengesetzten Schichtaufbau.

Unter "Eigensteifigkeit" des erfindungsgemäßen Schichtwerkstoffs ist im Sinne der Erfindung zu verstehen, daß er eine gewisse Biegefestigkeit und damit ein gewisses Formhaltevermögen und damit auch gewisse federelastische Eigenschaften aufweist und damit z.B. als Boden- oder Wandverkleidung, als mehr oder minder selbsttragende Hohlraumauskleidung, als Hohlraumwandung oder dergleichen verwendbar ist.

Die erfindungsgemäß verwendbaren Textilfasern können sowohl als einzelne Fasern als auch als zusammenhängend verarbeitete Faserstränge, insbesondere in der Form von Teppichbodenstücken vorliegen.

Der in dem erfindungsgemäß verwendeten Abfallmaterial enthaltene thermoplastische Kunststoff muß unter Wärmeeinwirkung aufschmelzbar sein. Dies ist in besonders bevorzugter Weise bei thermoplastischen Kunststoffen der Fall, z.B. bei den Polyamiden, den Polyolefinen, dem Polyvinyl und den Polyacrylharzen. Unter "unter Wärmeeinwirkung plastisch verformbaren" Textilfasern sind im Sinne der Erfindung aber auch solche zu verstehen, deren Kunststoff bzw. Kunststoffanteile unter Wärmeeinwirkung zum Schmelzen gebracht und in diesem Zustand geformt werden können und die bei anschließendem Erkalten erhärten. Es ist nicht erforderlich, daß der Kunststoff seine ursprünglichen Eigenschaften dabei beibehält. Er kann vielmehr auch in seiner Eigenschaft durch die unter Wärmeeinwirkung plastische Verformung grundlegend geändert werden. Entscheidend ist nur, daß die erfindungsgemäß gewünschte Eigensteifigkeit nach dem Wiedererhärten erzielt wird. Thermoplastische Kunststoffe werden aber bevorzugt, weil der damit hergestellte erfindungsgemäße Schichtwerkstoff seinerseits wiederverwendet werden kann, so daß eine Mehrfach-Wiederverwendung des Kunststoffs möglich ist.

In der bevorzugten Ausführungsform erfolgen das Aufschmnelzen an beiden Schichtoberflächen (Anspruch 2) und das Zerkleinern durch Reißen (Anspruch 3).

Der Kunststoffanteil des erfindungsgemäß verwendbaren Abfallmaterials kann in weiten Grenzen variieren, sollte eine Untergrenze von 1 % Volumenanteil, vorzugsweise von 10 % Volumenanteil aber nicht unterschreiten. Höhere Kunststoffanteile - bis 100 % - sind in der Regel vorteilhaft. Bei relativ geringen Kunststoffanteilen empfiehlt es sich, dem Abfallmaterial ein Bindemittel aus einem unter Wärmeeinwirkung aufschmelzbaren, insbesondere thermoplastischen Kunststoff beizumessen (Anspruch 4).

Die Herstellung des erfindungsgemäßen Schichtwerkstoffs kann mit an sich bekannten Arbeitstechniken und Maschinen erfolgen, insbesondere wie sie z.B. im Zusammenhang mit der Herstellung von Spanplatten bekannt sind (Anspruch 5).

Das Rohmaterial (Abfallmaterial) wird, gegebenenfalls nach vorangehender Zerkleinerung durch Reißen oder dergleichen zunächst als mehr oder minder lockere Schicht auf einer Unterlage flächenverteilt aufgehäuft. Sodann wird diese Schicht einer Flächenpressung unter gleichzeitiger Wärmeübertragung unterzogen. Dieser Prozeß kann kontinuierlich, vorteilhafterweise auf einer Durchlaufpresse, vorgenommen werden. Derartige Durchlaufpressen sind weithin bekannt, z.B. aus der DE 21 57 746 C3. Da derartige Herstellungsmaschinen nicht zum Gegenstand der Erfindung gehören und im übrigen nebst der gängigen Arbeitsmethoden weithin bekannt sind, erübrigt sich eine detaillierte Beschreibung solcher Maschinen und ihrer Arbeitsweisen sowie der Möglichkeiten, das Rohprodukt in eine solche Maschine einzubringen.

Die gleichzeitig während der Flächenpressung stattfindende Wärmeübertragung erfolgt bei Bedingungen (Temperatur/Zeit-Profil), die so bemessen sind, daß das Schichtmaterial an seiner/seinen der Wärmeübertragung ausgesetzten Schichtoberfläche/n und in der dieser Schichtoberfläche benachbarten oberflächennahen Zone aufgeschmolzen wird. Dabei versteht es sich, daß lediglich die unter den gegebenen Temperatur/Zeit-Bedingungen schmelzbaren Bestandteile des betreffenden Materials schmelzen müssen. Die in bezug auf die äußere Schichtoberfläche ferneren Zonen des Schichtmaterials unterliegen zwar ebenfalls einer gewissen Erwärmung, die jedoch nicht zu einem Aufschmelzen, sondern allenfalls zu einem Erweichen oder Oberflächenanschmelzen des Schichtmaterials führt, so daß eine faserige Grundstruktur in diesen Zonen erhalten bleibt. Ein Teil der Textilfasern (erste Faserabschnitte) unterliegt also nicht der Aufschmelzung des Kunststoffs und bildet die - hier so bezeichnete - Füllschicht, während die Faserabschnitte, die in der äußeren Schichtoberfläche oder in den oberflächennahen Zonen sich befinden, zusammengeschmolzen werden und die, hier so genannte, Tragschicht des Schichtwerkstoffs bilden. Dementsprechend ist der Schichtwerkstoff zumindest zweischichtig, in der Regel aber dreischichtig aufgebaut (je eine die äußere Oberfläche einschließende oberflächennahe Schicht und die zwischen diesen beiden liegende, noch Faserstruktur aufweisende Füllschicht).

Es versteht sich, daß je nach Verfahrensparametern und Zusammensetzung der verwendeten Ausgangsmischung eine relativ dünne, relativ hoch verdichtete Oberflächenschicht entsteht, an die sich eine mehr oder minder inhomogene Füllschicht anschließt. Der Übergang zwischen beiden kann sehr stark ausgeprägt sein, aber auch allmählich erfolgen.

Ausgiebige Versuche mit gebrauchten und ungebrauchten Teppichbodenresten bzw. mit Mischungen anderer textiler Abfallfasern haben gezeigt, daß erfindungsgemäß hergestellte bzw. beschaffene Schichtwerkstoffe eine überraschend hohe Querreißfestigkeit aufweisen, so daß ein Trennen der Schichten voneinander kaum möglich ist und im praktischen Gebrauch solcher Werkstoffe erst recht nicht auftreten kann.

Die Erfindung erstreckt sich auch auf einen flächigen Werkstoff nach den Ansprüchen 6 und 7.

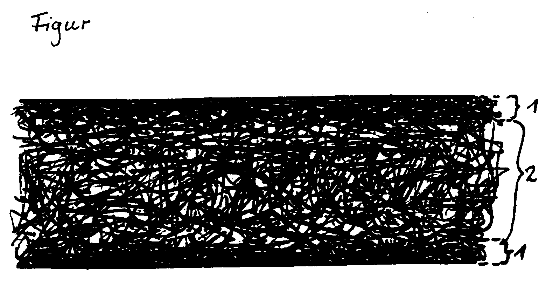

Als Ausführungsbeispiel ist in der einzigen Zeichnung ein Querschnitt durch einen erfindungsgemäßen Schichtwerkstoff dargestellt. Dieser weist erkennbar zwei den einander gegenüberliegenden parallelen Schichtoberflächen nahe Zonen 1 (Tragschichten) sowie eine zwischen diesen beiden liegende oberflächenferne Schicht 2 (Füllschicht) auf. Erkennbar sind die Randschichten stark verdichtet und Textilfasern aufgrund des Schmelzvorganges dort nicht individualisierbar. Demgegenüber können in der Füllschicht noch einzelne, weitgehend aber auch miteinander verklebte Fasern erkannt werden. Es versteht sich, daß in der Praxis nur außerordentlich kleine Hohlräume in dem Schichtwerkstoff vorhanden sind, was sich zeichnerisch aber kaum darstellen läßt.

## Patentansprüche

1. Verfahren zum Herstellen eines eigensteifen flächigen Werkstoffs für die Verwendung als Flächenbelag oder dergleichen unter Wiederverwendung von Kunststoffabfällen, bei welchem
- ein Abfallmaterial, welches unter Wärmeeinwirkung aufschmelzbare Textilfasern insbesondere aus thermoplastischem Kunststoff enthält, insbesondere Teppichbodenstücke, zerkleinert wird,
- aus dem zerkleinerten Abfallmaterial eine Schicht einer gewünschten Dicke gebildet wird,
- diese Schicht einer Flächenpressung unter gleichzeitiger Wärmeübertragung auf zumindest eine der flächengepreßten Schichtoberflächen ausgesetzt wird und
- das so geformte Schichtmaterial abgekühlt und entformt wird,
**dadurch gekennzeichnet**,
daß lediglich an seiner der Wärmeübertragung ausgesetzten Schichtoberfläche und in der dieser Schichtoberfläche benachbarten oberflächennahen Zone (1) aufschmelzbare Anteile des Abfallmaterials aufgeschmolzen werden, in der der äußeren Schichtoberfläche ferneren Zone (2) jedoch kein Aufschmelzen, sondern allenfalls ein Erweichen oder Oberflächenanschmelzen stattfindet.

2. Verfahren nach Anspruch 1, **dadurch gekennzeichnet**, daß die Wärmeübertragung und das Aufschmelzen an beiden flächengepreßten Schichtoberflächen erfolgen.

3. Verfahren nach Anspruch 1 oder 2, **dadurch gekennzeichnet**, daß das Zerkleinern durch Reißen geschieht.

4. Verfahren nach einem der Ansprüche 1 bis 3, **dadurch gekennzeichnet**, daß dem Abfallmaterial bei einem zu geringen Anteil an thermoplastischem Material vor dem Pressen ein Bindemittel aus thermoplastischem Kunststoff hinzugefügt wird.

5. Verfahren nach einem der Ansprüche 1 bis 4, **dadurch gekennzeichnet**, daß für die Flächenpressung unter gleichzeitiger Wärmeübertragung eine zur kontinuierlichen Herstellung von Holzspanplatten oder dergleichen bekannte Durchlaufpresse verwendet wird.

6. Eigensteifer flächiger Werkstoff, welcher zerkleinertes Abfallmaterial umfaßt, welches unter Wärmeeinwirkung aufschmelzbare Textilfasern, insbesondere aus thermoplastischem Kunststoff, enthält, insbesondere Teppichbodenstücke, und welches in einer Schicht an mindestens einer Schichtoberfläche einer Flächenpressung unter Wärmeübertragung ausgesetzt worden ist, wobei schmelzbare Anteile des Abfallmaterials aufgeschmolzen sind, **dadurch gekennzeichnet**, daß lediglich an der Schichtoberfläche und in der dieser Schichtoberfläche benachbarten oberflächennahen Zone (1) schmelzbare Anteile des Schichtmaterials aufgeschmolzen sind, in einer der äußeren Schichtoberfläche entfernteren Zone (2) des Schichtmaterials jedoch nicht aufgeschmolzen, sondern allenfalls erweicht gewesen sind.

7. Werkstoff nach Anspruch 6, **dadurch gekennzeichnet**, daß schmelzbare Anteile des Abfallmaterials an beiden Schichtoberflächen zusammengeschmolzen sind.

## Claims

1. A method of producing an inherently rigid flat material for use as a surface covering or the like based on the reuse of plastic scrap wherein:
- a scrap material containing heat-fusible textile fibres, more particularly of thermoplastics, more particularly pieces of floor carpeting, is comminuted;
- a layer of a required thickness is formed from the comminuted scrap material;
- this layer is treated by surface pressing with simultaneous heat transfer to at least one of the surface-pressed layer surfaces, and
- the layer material thus formed is cooled and removed from the mould,
characterised in that
fusible parts of the scrap material are fused solely on its layer surface exposed to the heat transfer and in the superficial zone (1) adjacent such layer surface, but in the zone (2) further away from the outer layer surface there is no fusion but merely a softening or surface melting.

2. A method according to claim 1, characterised in that the heat transfer and fusion are effected on both the surface-pressed layer surfaces.

3. A method according to claim 1 or 2, characterised in that comminution is effected by tearing.

4. A method according to any of claims 1 to 3, characterised in that a thermoplastic binder is added to the scrap material before pressing if the thermoplastic content of the scrap material is too low.

5. A method according to any of claims 1 to 4, characterised in that a continuous press known for the continuous production of chipboard panels or the like is used for the surface pressing with simultaneous heat transfer.

6. An inherently rigid flat material comprising comminuted scrap and containing heat-fusible textile fibres, more particularly of thermoplastics, more particularly pieces of floor carpeting, the material being subjected in one layer on at least one layer surface to surface pressing with heat transfer, fusible constituents of the scrap material being fused, characterised in that fusible constituents of the layer material are fused solely on the layer surface and in the superficial zone (1) adjacent such layer surface but are not fused in a zone (2) of the layer material further away from the outer layer surface but are, at most, softened.

7. A material according to claim 6, characterised in that fusible constituents of the scrap material are melted together on both layer surfaces.

## Revendications

1. Procédé de fabrication d'un matériau plat autoporteur à utiliser comme revêtement de surface ou analogue en réutilisant des déchets de matière plastique, où on déchiquette un matériau de déchets qui contient des fibres textiles fusibles sous l'effet de la chaleur, notamment en matière plastique, notamment des morceaux de moquette,
- à partir du matériau de déchets déchiqueté on forme une couche d'épaisseur souhaitée,
- on soumet cette couche à une compression superficielle avec transmission de chaleur simultanée sur au moins l'une des surfaces de couche comprimée à plat et,
- on refroidit le matériau de couche ainsi moulé et on démoule,
caractérisé en ce qu'
on fond seulement des fractions fusibles du matériau de déchet dans sa surface de couche exposée à la chaleur et dans la zone (1) proche de la surface voisine de la surface de couche, dans la zone (2) plus éloignée de la surface de couche externe il n'y a pas de fusion, mais seulement un ramollissement ou une fusion de surface.

2. Procédé selon la revendication 1,
caractérisé en ce qu'
on réalise la transmission de chaleur et la fusion au niveau des deux surfaces de couche comprimées superficiellement.

3. Procédé selon la revendication 1 ou 2,
caractérisé en ce que
le déchiquetage a lieu par déchirure.

4. Procédé selon l'une des revendications 1 à 3,
caractérisé en ce qu'
on ajoute un liant de matière thermoplastique au matériau de déchets avant le pressage quand la teneur en matière thermoplastique est trop faible.

5. Procédé selon l'une des revendications 1 à 4,
caractérisé en ce qu'
on utilise une presse en continu comme pour la fabrication en continu de panneaux de particules de bois ou analogue pour la compression superficielle avec transmission de chaleur simultanée.

6. Matériau plat autoporteur, qui comprend du matériau de déchet déchiqueté, qui contient des fibres textiles fusibles sous l'effet de la chaleur, notamment en matière thermoplastique, notamment des morceaux de moquette, et qui est exposé en une couche sur au moins une surface de couche à une compression superficielle avec transmission de chaleur où les fractions fusibles du matériau de déchet sont fondues,
caractérisé en ce qu'
on fond seulement des fractions fusibles du matériau de couche à la surface de couche et dans la zone (1) proche de la surface voisine de cette surface de couche, dans la zone (2) plus éloignée de la surface de couche externe du matériau stratifié il n'y a pas de fusion mais seulement un ramollissement.

7. Matériau selon la revendication 6,
caractérisé en ce que
les fractions fusibles du matériau de déchet sont fondues ensembles sur les deux surfaces de couche.
